# EUROPÄISCHE PATENTSCHRIFT

(11) **EP 1 023 327 B1**
(45) Veröffentlichungstag und Bekanntmachung des Hinweises auf die Patenterteilung: **16.04.2003**
(21) Anmeldenummer: 98952649.6
(22) Anmeldetag: 25.09.1998
(51) Int. Cl.: C08B 37/00, C08B 15/10, C08B 11/20

(54) **Verfahren zur Herstellung von verzögert wasserlöslichen Polysacchariden**
Process for the preparation of polysaccharide derivatives having a delayed water solubility
Procédé de préparation de dérivés de polysaccharides ayant une solubilité dans l'eau rétardée

(30) Priorität: 06.10.1997 DE 19744073
(43) Veröffentlichungstag der Anmeldung: 02.08.2000
(73) Patentinhaber: Henkel Kommanditgesellschaft auf Aktien, 40589 Düsseldorf-Holthausen (DE)
(72) Erfinder: WITT-NÜSSLEIN, Sandra, D-40764 Langenfeld (DE); HALLER, Werner, D-40699 Erkrath (DE); SCHÖTTMER, Bernhard, D-40789 Monheim (DE); HOFFMANN, Heinz-Peter, D-40789 Monheim (DE); PÖPPL, Andrea, D-41564 Kaarst (DE); DÖRING, Norbert, D-41464 Neuss (DE)
(86) Internationale Anmeldenummer: EP9806114
(87) Internationale Veröffentlichungsnummer: WO99018132

(56) Entgegenhaltungen:
- EP-A- 0 059 050
- DE-A- 1 518 213
- DE-B- 1 239 672
- FR-A- 2 265 762
- US-A- 4 508 576

## Beschreibung

Die Erfindung betrifft ein Verfahren zur Herstellung von verzögert wasserlöslichen Polysaccharidderivaten, insbesondere Celluloseetherderivate, umfassend mindestens zwei Verfahrensschritte, insbesondere mindestens eine Kontaktstufe und mindestens eine Erwärmungsstufe, wobei mindestens eine Erwärmungsstufe die Behandlung eines Polysaccharidderivats mit elektromagnetischer Strahlung eines Frequenzbereichs von etwa 3 bis etwa 300.000 MHz umfaßt

Wasserlösliche Polysaccharidderivate, z.B. Celluloseether, wie Methylcellulose, Hydroxyethylcellulose oder Hydroxypropylcellulose, haben als Klebstoffe, Verdickungsmittel oder Schutzkolloide weitverbreitet Anwendung gefunden. In der Regel neigen diese Stoffe beim Eintrag in Wasser zur oberflächlichen Quellung und damit zur anschließenden Verklumpung. Da während der zur vollständigen Auflösung erforderlichen Zeit die Viskosität der Lösungen ständig zunimmt, neigen die zuletzt in Lösung gehenden Polysaccharidderivatteilchen aufgrund der eingeschränkten Bewegungsfreiheit noch stärker zur Klumpenbildung. Weiterhin ist zur Dispergierung und Auflösung dieser Polysaccharidderivate ein erheblicher Zeit- und Energieaufwand erforderlich.

Es ist seit langem bekannt, wasserlösliche Polysaccharide oder Polysaccharidderivate mit Glyoxal zu behandeln, um die Verklumpungsneigung beim Einrühren zu unterdrücken. So ist beispielsweise aus der DE-C 1 719 445 ein Verfahren zur Herstellung von verdickten Lösungen wasserlöslicher Celluloseether bekannt, bei dem feinkömige oder pulverförmige, trockene Celluloseether oberflächlich bis zur Wasserunlöslichkeit mit Glyoxal oder Polyglyoxal vernetzt werden. Das Verfahren umfaßt eine mindestens eine halbe Stunde dauernde Wärmebehandlungsstufe, wonach die erhaltenen Produkte immer noch zur Klumpenbildung beim Auflösen neigen.

Weiterhin ist aus der DE 1 239 672 bekannt, zu diesem Zweck Methylcellulose mit einem Dialdehyd, z.B. Glyoxal, umzusetzen. Eine Erwärmung der daraus hergestellten Paste ist nicht erforderlich. Gegebenenfalls erfolgt sie bei der Nachreaktion während des späteren Trocknens.

Aus der DE-C 2 415 556 ist es bekannt, feuchte Polysaccharidderivate mit einer wäßrigen Glyoxallösung zu verkneten. Nach Trocknung und Vermahlung werden Pulver erhalten, die ebenfalls kein völlig befriedigendes Lösungsverhalten in bezug auf Klumpenbildung zeigen. Als alternatives Verfahren wird vorgeschlagen, ein trockenes, feinpulvriges Polysaccharidderivat mit Polyglyoxal zu vermischen und die Mischung für eine halbe bis 12 Stunden auf 50 bis 150°C zu erhitzen. Auch dieses Verfahren führt nicht zu Polysaccharidderivaten mit befriedigendem Lösungsverhalten.

Ein weiterer Nachteil der aus dem Stand der Technik bekannten, wasserlöslichen Polysaccharidderivate liegt darin begründet, daß der Auflösungsvorgang in Wasser in der Regel durch eine Erhöhung des pH-Werts des Wassers ausgelöst wird. Um diese Erhöhung des pH-Werts zu erreichen, wird einer Formulierung, die das verzögert wasserlösliche Polysaccharidderivat enthält, in der Regel eine wasserlösliche Base zugesetzt, wodurch jedoch der Gehalt an Polysaccharidderivat reduziert wird. Es ist außerdem aus Sicht des Anwenders nicht wünschenswert, Produkte mit einem hohen pH-Wert zu verarbeiten, da neutrale Produkte dermatologisch verträglicher und materialschonender bei der Verarbeitung sind.

Als weiterer Nachteil ist eine verfahrensbedingte inhomogene Vernetzung zu sehen, die zudem meist mit einer ungenügenden Umsetzung des Glyoxals verbunden ist.

Aufgabe der vorliegenden Erfindung war es daher, ein Verfahren zur Herstellung von Polysaccharidderivaten zur Verfügung zu stellen, das die oben genannten Nachteile des Standes der Technik nicht aufweist. Insbesondere soll das Verfahren zu Polysaccharidderivaten führen, die sich in kaltem Wasser, vorzugsweise ohne Erhöhung des pH-Werts, ohne Klumpenbildung und vorzugsweise nach einem definierten Zeitraum vollständig auflösen. Weiterhin soll das Verfahren in bezug auf die aufgewandte Zeit und die aufgewandte Energie möglichst effizient sein. Ebenfalls Aufgabe der Erfindung ist es verzögert wasserlösliche Polysaccharide herzustellen, die sich in Wasser bei weitgehend neutralem pH-Wert verzögert lösen. Weiterhin war es Aufgabe der Erfindung ein Verfahren zur Verfügung zu stellen, mit dem sich die Verzögerungszeit, d.h., die Zeit die zwischen dem Einbringen des Polysaccharidderivats in Wasser und dem erkennbaren Beginn der Auflösung vergeht, einfach und reproduzierbar anhand der Verfahrensparameter einstellen läßt.

Es wurde nun gefunden, daß sich in Wasser bei im wesentlichen neutralem pH-Wert klumpenfrei und verzögert lösliche Polysaccharidderivate in kurzer Zeit und unter im Vergleich zum Stand der Technik erheblich reduziertem Energieaufwand erhalten lassen, wenn man die für die Erwärmungs- oder Trockenstufen erforderliche Energie zumindest teilweise, vorzugsweise jedoch im wesentlichen vollständig, in Form von elektromagnetischer Strahlung eines Frequenzbereichs von etwa 3 bis etwa 300.000 MHz zuführt Die erfindungsgemäß erhältlichen Polysaccharidderivate benötigen keinen Alkalizusatz, um verzögert in Wasser löslich zu sein, gewünschtenfalls kann jedoch Alkali zugesetzt werden.

Gegenstand der Erfindung ist damit ein Verfahren zur Herstellung von verzögert wasserlöslichen Polysaccharidderivaten, umfassend
a) Kontaktieren eines Polysaccharidderivats mit einer wäßrigen Lösung von Glyoxal und/oder mit Polyglyoxal in einer Kontaktstufe
   und
b) Erwärmen des Polysaccharidderivats, während der Kontaktstufe und/oder im Anschluß daran, auf eine Temperatur von 50 bis 150°C in einer Erwärmungsstufe
wobei mindestens ein Teil der in der Erwärmungsstufe b) benötigten Energie in Form von elektromagnetischer Strahlung eines Frequenzbereichs von 3 bis 300.000 MHz zugeführt wird.

Die Anwendungskonzentration und Wasserlöslichkeit der beim erfindungsgemäßen Verfahren benutzten Polysaccharidderivate beträgt in der Regel wenigstens etwa 0,5 Gewichtsteile pro 100 Gewichtsteile Wasser.

Vorzugsweise weisen die Polysaccharidderivate jedoch eine Löslichkeit von mindestens etwa 0,5 Gewichtsteilen pro 30 Gewichtsteilen Wasser auf.

Die nach dem erfindungsgemäßen Verfahren behandelten Polysaccharidderivate weisen anschließend eine verzögerte Wasserlöslichkeit auf. Im Rahmen des vorliegenden Textes bedeutet dies, daß die nach dem erfindungsgemäßen Verfahren erhältlichen Polysaccharidderivate sich im Vergleich zu ihrer ursprünglichen, vor Anwendung des erfindungsgemäßen Verfahrens vorliegenden Form erst zu einem späteren Zeitpunkt in Wasser lösen. Gegebenenfalls kann dieser spätere Zeitpunkt durch den Verwender der Polysaccharidderivate bestimmt werden, indem er eine bestimmte Handlung durchführt, beispielsweise den pH-Wert verändert, vorzugsweise sind die erfindungsgemäßen Polysaccharidderivate jedoch ohne weitere Behandlung oder äußere Einflußnahme, insbesondere in einer im wesentlichen pH-neutralen Umgebung, verzögert wasserlöslich.

Die erfindungsgemäß hergestellten Polysaccharidderivate sind in Wasser mit einem pH-Wert von 6,5 bis 7,5 löslich.

Unter Polysaccharidderivaten werden im Rahmen der vorliegenden Erfindung wasserlösliche makromolekulare Kohlehydrate verstanden, deren Moleküle aus einer großen Zahl, in der Regel mehr als 10, vorzugsweise jedoch deutlich mehr, glykosidisch miteinander verknüpften Monosaccharidbausteinen bestehen. Besonders bevorzugte Polysaccharidderivate sind im Rahmen der vorliegenden Erfindung die wasserlöslichen Cellulosederivate, insbesondere die Celluloseether. Ebenfalls vom Begriff "Polysaccharidderivate" umfaßt sind die nicht-derivatisierten, jedoch wasserlöslichen Polysaccharide, beispielsweise Stärke, Stärkederivate sowie andere Hydrokolloide.

Celluloseether sind Cellulosederivate, die durch partielle oder vollständige Substitution von Wasserstoffatomen der Hydroxygruppen der Cellulose durch Alkylund/oder (Ar)alkyl-Gruppen hergestellt werden. Die Alkyl- und/oder (Ar)alkyl-Gruppen können zusätzlich nichtionische, anionische oder kationische Gruppen aufweisen. Dabei sind die Einzelmoleküle in der Regel unterschiedlich substituiert, so daß ihr Substitutionsgrad ein Mittelwert ist. Außerdem kann die Substitution auch an während der Reaktion entstehenden "neuen" Hydroxylgruppen einsetzen, was z.B. beim Reaktionspartner Epoxid der Fall ist.

Die Veretherung der Cellulose wird im allgemeinen durch Einwirkung von (Ar)alkylhalogeniden, beispielsweise Methyl-, Ethyl- und/oder Benzylchlorid, 2-Chlorethyldiethylamin oder Chloressigsäure, und/oder Epoxiden, z.B. Ethylen-, Propylen- und/oder Butylenoxid, Glycidyltrimethylammoniumchlorid, und/oder aktiviertem Olefin, beispielsweise Acrylnitril, Acrylamid oder Vinylsulfonsäure, auf mit Basen, meist mit wäßriger Natronlauge, aktivierter Cellulose durchgeführt. Bevorzugt sind. im Rahmen der vorliegenden Erfindung Carboxy-methylcellulose, Methylcellulose, Ethylcellulose, Hydroxyalkylcelluiose, insbesondere Hydroxyethylcellulose oder deren Mischether, wie Methylhydroxyethyl- oder - hydroxypropylcellulose, Carboxymethylhydroxyethylcellulose und/oder Ethylhydroxyethylcellulose.

Unter "Kontaktstufe" wird im erfindungsgemäßen Verfahren ein Verfahrensschritt verstanden, bei dem das, gegebenenfalls in irgendeiner Weise vorbehandelte, Polysaccharidderivat mit einem zweiten Stoff, beispielsweise Glyoxal oder Wasser, in Kontakt gebracht wird. Der Begriff "Kontaktstufe" umfaßt im Rahmen der Erfindung zwar auch reinen Verfahrensmaßnahmen, wie Mischen, Umfüllen, Erwärmen, Extrudieren und dergleichen, beinhaltet dabei jedoch immer zusätzlich den, gegebenenfalls erneuten, Kontakt des gegebenenfalls in irgendeiner Weise vorbehandelten Polysaccharidderivats mit einem zweiten Stoff, wie oben beschrieben.

In einer Kontaktstufe a) des erfindungsgemäßen Verfahrens wird das Polysaccharidderivat mit einer wäßrigen Lösung von Glyoxal und/oder mit Polyglyoxal kontaktiert Vorzugsweise handelt es sich dabei um eine erste Kontaktstufe im Rahmen des erfindungsgemäßen Verfahrens.

Das Polysaccharidderivat sollte zu diesem Zweck bevorzugt in trockener Form vorliegen, d.h. mit einem Wassergehalt von höchsten etwa 15 Gew.-%, vorzugsweise höchstens etwa 10 Gew.-%.

Besonders bevorzugt weisen die trockenen Polysaccharidderivate jedoch Wassergehalte von höchstens etwa 5 bis etwa 15 Gew.-%, besonders bevorzugt höchstens etwa 6 bis etwa 9 Gew.-% auf.

Ebenso möglich ist im Rahmen des erfindungsgemäßen Verfahrens der Einsatz von feuchten, d.h. wasserhaltigen, Polysaccharidderivaten, wie sie beispielsweise als Rohprodukte aus der Celluloseveretherung erhältlich sind. Die feuchten Polysaccharidderivate weisen in der Regel einen Wassergehalt von mehr als etwa 15 Gew.-% bis etwa 70 Gew.-%, vorzugsweise etwa 40 bis etwa 60 Gew.-% auf. Das trockene Polysaccharidderivat wird in der Regel in Pulverform eingesetzt und weist bevorzugt zu etwa 60 %, besonders bevorzugt zu etwa 70 % und insbesondere bevorzugt zu etwa 80 % eine Teilchengröße von weniger als etwa 0,5 mm, bevorzugt weniger als etwa 0,3 mm und besonders bevorzugt weniger als etwa 0,2 mm (bestimmt nach DIN 4188) auf. Ganz besonders bevorzugt sind Polysaccharidderivate mit Teilchengrößen von wenigstens 0,1 mm Durchmesser.

Wird das Polysaccharidderivat im feuchten Zustand eingesetzt, so liegt es bevorzugt in Form von Flocken mit einem Durchmesser von zweckmäßigerweise etwa 3 bis 10 mm vor und hat einen pH-Wert von etwa 6 bis etwa 10.

Das Kontaktieren des Polysaccharidderivats mit der wäßrigen Lösung von Glyoxal oder mit dem Polyglyoxal in der Kontaktstufe a), vorzugsweise in der ersten Kontaktstufe, kann auf beliebige Weise erfolgen. Wird ein feuchtes Polysaccharidderivat eingesetzt, so kann die wäßrige Glyoxallösung beispielsweise durch Aufsprühen, Zutropfen oder jede geeignete andere Zugabeart erfolgen. Es ist ebenfalls möglich, die wäßrige Lösung von Glyoxal und das Polysaccharidderivat in einer Knetvorrichtung, beispielsweise in einem Extruder, zu vermischen. Auch jede andere Mischvorrichtung ist geeignet, beispielsweise Rotor-Stator Mischvorrichtungen.

Wird trockenes Polysaccharidderivat in der Kontaktstufe a) mit einer wäßrigen Lösung von Glyoxal und/oder mit Polyglyoxal behandelt, so bietet sich zum Vermischen beispielsweise die feuchte oder vorzugsweise die trockene Vermahlung an.

Wird zur Behandlung des Polysaccharidderivats in der Kontaktstufe a) eine wäßrige Lösung von Glyoxal eingesetzt, so enthält diese in der Regel etwa 0,1 bis etwa 50 Gew.-%, vorzugsweise etwa 2 bis etwa 45 Gew.-% Glyoxal.

Beim Polyglyoxal handelt es sich vorzugsweise um die im Handel erhältliche (Highlink 80, Hersteller: Tromsal), etwa 80 Gew.-%ige Form.

Glyoxal und/oder Polyglyoxal werden, bezogen auf das Polysaccharidderivat, in der Regel in der Kontaktstufe a) in einem Anteil von etwa 0,05 bis etwa 8 Gew.-%, vorzugsweise etwa 0,1 bis etwa 5 Gew.-% und besonders bevorzugt in einem Anteil von etwa 0,5 bis etwa 2 Gew.-% eingesetzt.

Besonders bevorzugt ist es, wenn Polyglyoxal in einer Menge von < 1 Gew.-%, bezogen auf Polysaccharidderivat, eingesetzt wird.

Die löslichkeitsverzögernde Wirkung von Glyoxal oder Polyglyoxal auf wasserlösliche Polysaccharidderivate läßt sich erzielen, indem das Gemisch aus Polysaccharidderivat und Glyoxal und/oder Polyglyoxal in mindestens einer Erwärmungsstufe b) einer Erwärmung unterzogen. Die Erwärmung kann beispielsweise gleichzeitig mit der Kontaktstufe a) erfolgen (z.B. während des Verknetens), zweckmäßigerweise erfolgt sie jedoch im Anschluß daran. In der Regel wird das Gemisch aus Polysaccharidderivat und Glyoxal und/oder Glyoxal im Verlauf der Erwärmungsstufe b) auf eine Temperatur von etwa 50 bis etwa 110°C, bevorzugt etwa 60 bis etwa 90°C und besonders bevorzugt etwa 70 bis etwa 85°C erhitzt.

Die mindestens eine Erwärmungsstufe b) wird im Sinne der vorliegenden Erfindung durchgeführt, indem die zur Erwärmung notwendige Energie wenigstens anteilig in Form von elektromagnetischer Strahlung mit einem Frequenzbereich von etwa 3 bis etwa 300.000 MHz zugeführt wird.

Bevorzugt liegt der Frequenzbereich bei etwa 3 MHz bis etwa 30.000 MHz und besonders bevorzugt in einem Frequenzbereich von etwa 10 MHz und etwa 10.000 MHz. Besonders bevorzugt ist der letztgenannte Frequenzbereich, der in den Bereich der in der Regel als Mikrowellen bezeichneten Strahlung fällt. Verwendbar sind sowohl Mikrowellen-Durchlauferwärmungsanlagen als auch Mikrowellen-Batchanlagen. Die Mikrowellenleistung des Magnetrons liegt in der Regel zwischen etwa 1 und etwa 30 Kilowatt. Die gesamte Mikrowellenleistung einer Anlage wird meist von einer großen Anzahl, z.B. etwa 10 bis etwa 100, kleiner Module mit einer Mikrowellenleistung von etwa 1 bis etwa 2 Kilowatt erzeugt.

Die elektromagnetische Strahlung kann sowohl für das Erwärmen von feuchten Gemischen aus Polysaccharidderivat und Glyoxal und/oder Polyglyoxal eingesetzt werden, es ist jedoch bevorzugt in einer ersten Erwärmungsstufe b) ein Gemisch aus trockenem Polysaccharidderivat und Polyglyoxal durch Einstrahlung der elektromagnetischen Strahlung zu erwärmen.

Die elektromagnetische Strahlung kann gegebenenfalls lediglich einen Teil der zum Erwärmen eingesetzten Energie bereitstellen, beispielsweise etwa 1% bis etwa 10 %, etwa 20 %, etwa 30 %, etwa 50 % oder mehr, vorzugsweise ist die elektromagnetische Strahlung jedoch im wesentlichen die ausschließliche Energiequelle zum Erwärmen, d.h. sie liefert im wesentlichen 100% der zum Erwärmen eingesetzten Energie.

Die Leistung der eingestrahlten elektromagnetischen Strahlung muß in Abhängigkeit von der Frequenz der eingesetzten Strahlung, der Menge des bestrahlten. Gemischs und der angestrebten Bestrahlungsdauer angepaßt werden. Die Gefäßgeometrie kann beispielsweise in Abhängigkeit von der Eindringtiefe der jeweils verwendeten Strahlung in das jeweilige zu behandelnde Gemisch gewählt werden. Die Eindringtiefe ist dabei abhängig vom dielektrischen Verlustfaktor des jeweils zu behandelnden Gemischs.

Wird die Erwärmungsstufe b) an feuchten Gemischen durchgeführt, so kann damit gleichzeitig ein Trocknungsvorgang verbunden werden.

Wird die Erwärmungsstufe b), wie im Rahmen der vorliegenden Erfindung bevorzugt, an einem Gemisch aus trockenem Polysaccharidderivat und Polyglyoxal durchgeführt, so wird das aus der Kontaktstufe a) und der Erwärmungsstufe b) erhältliche Produkt gegebenenfalls
c) in einer weiteren Kontaktstufe mit 1 bis 60 Gew.-%, bevorzugt etwa 5 bis etwa 45 Gew.-% und besonders bevorzugt mit etwa 10 bis etwa 35 Gew.-% Wasser versetzt und
d) während der weiteren Kontaktstufe, oder im Anschluß daran, in einer weiteren Erwärmungsstufe d) auf eine Temperatur von 50 bis 150°C erhitzt,
wobei mindestens ein Teil der in der weiteren Erwärmungsstufe d) zum Erwärmen benötigten Energie in Form von elektromagnetischer Strahlung eines Frequenzbereichs von 3 bis 300.000 MHz zugeführt wird.

Vorzugsweise wird das Gemisch anschließend in einer geeigneten Vorrichtung, beispielsweise einem Mischer, homogenisiert. Das so erhältliche feuchte Produkt wird entweder während des Homogenisierungsvorgangs, oder vorzugsweise im Anschluß daran, einer weiteren Erwärmungsstufe d) unterzogen.

Für die weitere Erwärmungsstufe d) gelten vorzugsweise die für die bereits beschriebenen Erwärmungsstufe b) gemachten Ausführungen, d.h. der zum Erwärmen notwendige Energieeintrag stammt vorzugsweise entweder anteilig, mit den oben genannten bevorzugten Anteilen, oder vollständig aus elektromagnetischer Strahlung mit einer Frequenz von etwa 3 bis etwa 300.000 MHz. Die bei dieser weiteren Erwärmungsstufe d) erreichten Temperaturen im Gemisch liegen bei etwa 70 bis etwa 120 °C, vorzugsweise bei etwa 75 bis etwa 100°C.

Die Einwirkung der elektromagnetischen Strahlung erfolgt jeweils über einen Zeitraum von etwa 0,5 Minuten bis etwa 60 Minuten. Vorzugsweise liegt die Bestrahlungsdauer jedoch bei weniger als etwa 40 Minuten, beispielsweise etwa 0,5 bis etwa 30 Minuten, besonders bevorzugt etwa 1 bis etwa 10 Minuten.

In einem alternativen Verfahren, kann auch die weitere Erwärmungsstufe d), sowie gegebenenfalls weitere Erwärmungsstufen, in konventioneller Weise, d.h. unter Verwendung von konventionellen Heizaggregaten, beispielsweise elektrisch beheizbaren Mischvorrichtungen, durchgeführt werden. Es ist jedoch bezüglich Zeitund Energieeinsparung sowie hinsichtlich der Produktqualität besonders vorteilhaft, wenn die Mehrzahl der Erwärmungsstufen, vorzugsweise alle, unter Einsatz elektromagnetischer Strahlung mit einem Frequenzbereich von etwa 3 bis etwa 300.000 Mhz durchgeführt werden.

Die durch die Umsetzung mit Glyoxal und/oder Polyglyoxal bewirkte, oberflächliche Unlöslichkeit der erfindungsgemäßen Polysaccharidderivate kann beispielsweise durch Zusatz alkalisch reagierender Stoffe aufgehoben werden. Hierzu zählen beispielsweise Ammonium-, Alkali- und/oder Erdalkalimetallhydroxide, die wasserlöslichen, vorzugsweise pulverförmigen Alkalimetallsilikate (Wasserglas), insbesondere Na- oder K-Wasserglas sowie Ammoniak und Amine oder basische Salze und Neutralsalze, die sie von starken und schwachen Säuren ableiten. Hierzu gehören beispielsweise die Alkalisalze der Kohlensäure oder der Carbonsäuren oder der tertiären Phosphate. Die genannten Verbindungen können alleine oder als Gemisch aus zwei oder mehr davon eingesetzt werden. Wenn im Rahmen der Auflösung der Polysaccharidderivate Basen zugegeben werden sollen, dann beträgt die zuzugebende Menge im allgemeinen etwa 0,1 bis etwa 2 Gew.-%, bezogen auf das eingesetzte, trockene Polysaccharidderivat.

Eine Basenzugabe ist jedoch bei den erfindungsgemäß hergestellten Polysaccharidderivaten nicht notwendig, um den Auflösungsvorgang auszulösen oder um die Retardierungszeit zu steuern.

Nach dem erfindungsgemäßen Verfahren kann demnach ein alkalifreies Polysaccharidderivat hergestellt werden, das sich nach dem Einbringen in Wasser nach einer Retardierungszeit von bis zu 15 Minuten, insbesondere bis zu 10 Minuten, innerhalb einer Aufschlußzeit von 3 Minuten oder weniger, klumpenfrei in Wasser anrühren läßt Vorzugsweise beträgt die Retardierungszeit etwa 2 bis etwa 4 Minuten.

Unter "alkalifrei" wird im Rahmen der vorliegenden Erfindung ein Polysaccharid verstanden, das keine den pH-Wert des zur Auflösung des Polysaccharids eingesetzten Wassers zu höheren Werten hin verändemde Zusätze enthält. In der Regel ist davon auszugehen, daß ein erfindungsgemäß hergestelltes alkalifreies Polysaccharid den pH-Wert des zur Auflösung verwendeten Wassers nicht oder nicht wesentlich verändert. Weiterhin ist üblicherweise davon auszugehen, daß das erfindungsgemäß hergestellte alkalifreie Polysaccharid sich innerhalb der beanspruchten Aufschlußzeit in Wasser mit einem pH-Wert von nicht mehr als 8, insbesondere nicht mehr als 7,7, 7,5, oder 7,3, auflöst. Vorzugsweise löst sich das alkalifreie Polysaccharidderivat innerhalb der beanspruchten Aufschlußzeit in Wasser mit einem im wesentlichen neutralen pH-Wert, d.h. einem pH-Wert von etwa 7, beispielsweise etwa 6,8, 6,9, 7,1 oder 7,2.

Unter der "Retardierungszeit" wird im Rahmen der vorliegenden Erfindung der Zeitraum verstanden, der zwischen Einbringen (vorzugsweise: Einrühren) des erfindungsgemäß hergestellten Polysaccharidderivats in Wasser und dem erkennbaren Beginn des Auflösungsvorgangs (sichtbare Quellung der Polysaccharidteilchen) vergeht.

Mit "Aufschlußzeit" wird im Rahmen des vorliegenden Textes die Zeitspanne bezeichnet, die zwischen Beginn des Auflösungsvorgangs (dem Ende der Retardierungszeit) und vollständiger, klumpenfreier Auflösung vergeht

Die erfindungsgemäß hergestellten Polysaccharidderivate können auch als Schutzkolloid, Verdickungsmittel, Klebstoff oder Malerpaste verwendet werden.

Die Erfindung wird nachfolgend durch Beispiele näher erläutert

### Beispiel:

99 Gew.-Teile Methylhydroxyethylcellulose, (2 Gew.-% in Wasser ergeben eine Brookfield-Viskosität von etwa 10.000 mPas) werden mit 1 Gew.-Teil Polyglyoxal homogen vermengt Anschließend werden 80 g dieses Gemenges für 9 min mit einem Mikrowellenlaborsystem (MLS 1200, Hersteller: MLS) bei 2450 MHz mit einer Mikrowellenleistung von 250 Watt bestrahlt Im Anschluß daran werden 30 Gew.-% Wasser zugegeben und nochmals homogen vermischt. Das so erhältliche Gemisch wird abschließend nochmals für 10 min mit dem o.g. Mikrowellenlaborsystem bei gleichen Parametern bestrahlt.

## Patentansprüche

1. Verfahren zur Herstellung von verzögert wasserlöslichen Polysaccharidderivaten, umfassend die Stufen
a) Kontaktieren eines Polysaccharidderivats mit einer wäßrigen Lösung von Glyoxal und/oder mit Polyglyoxal in einer Kontaktstufe
und
b) Erwärmen des Polysaccharidderivats, während der Stufe a) und/oder im Anschluß daran, auf eine Temperatur von 50 bis 150°C in einer Erwärmungsstufe
**dadurch gekennzeichnet, daß** mindestens ein Teil der in der Erwärmungsstufe b) benötigten Energie in Form von elektromagnetischer Strahlung eines Frequenzbereichs von 3 bis 300.000 MHz zugeführt wird.

2. Verfahren nach Anspruch 1, **dadurch gekennzeichnet, daß** das eingesetzte Polysaccharidderivat einen Wassergehalt von höchstens 15 Gew.-% aufweist.

3. Verfahren nach Anspruch 1 oder 2, **dadurch gekennzeichnet, daß** das eingesetzte Polysaccharidderivat in Pulverform vorliegt, wobei 60 % eine Teilchengröße von weniger als 0,5 mm aufweisen (bestimmt nach DIN 4188).

4. Verfahren nach einem der vorstehenden Ansprüche, **dadurch gekennzeichnet, daß** in Stufe a) Polyglyoxal eingesetzt wird.

5. Verfahren nach einem der vorstehenden Ansprüche, **dadurch gekennzeichnet, daß** die elektromagnetische Strahlung für einen Zeitraum von 0,5 bis 60 Minuten zugeführt wird.

6. Verfahren nach einem der vorstehenden Ansprüche, **dadurch gekennzeichnet, daß** das Produkt aus der Erwärmungsstufe b)
c) in einer weiteren Kontaktstufe mit 1 bis 60 Gew.-% Wasser versetzt wird
und
d) während der Stufe c) oder im Anschluß daran, in einer weiteren Erwärmungsstufe auf eine Temperatur von 50 bis 150°C erhitzt wird,
wobei mindestens ein Teil der in der weiteren Erwärmungsstufe d) zum Erwärmen benötigten Energie in Form von elektromagnetischer Strahlung eines Frequenzbereichs von 3 bis 300.000 MHz zugeführt wird.

7. Verfahren nach einem der vorstehenden Ansprüche, **dadurch gekennzeichnet, daß** die elektromagnetische Strahlung jeweils für einen Zeitraum von 0,5 bis 60 Minuten, vorzugsweise 1 bis 30 Minuten, zugeführt wird.

8. Verfahren nach einem der vorstehenden Ansprüche, **dadurch gekennzeichnet, daß** die elektromagnetische Strahlung einen Frequenzbereich von jeweils 300 bis 30.000 MHz aufweist.

## Claims

1. A process for the production of polysaccharide derivatives dissolving in water with delay comprising the steps of
a) contacting a polysaccharide derivative with an aqueous solution of glyoxal and/or with polyglyoxal in a contact step and
b) heating the polysaccharide derivative during step a) and/or thereafter to a temperature of 50 to 150°C in a heating step,
**characterized in that** at least part of the energy required in heating step b) is supplied in the form of electromagnetic radiation in the frequency range from 3 to 300,000 MHz.

2. A process as claimed in claim 1, **characterized in that** the polysaccharide derivative used has a water content of at most 15% by weight.

3. A process as claimed in claim 1 or 2, **characterized in that** the polysaccharide derivative used is present in powder form, 60% having a particle size of less than 0.5 mm (as determined to DIN 4188).

4. A process as claimed in any of the preceding claims, **characterized in that** polyglyoxal is used in step a).

5. A process as claimed in any of the preceding claims, **characterized in that** the electromagnetic radiation is applied for 0.5 to 60 minutes.

6. A process as claimed in any of the preceding claims, **characterized in that** the product from heating step b)
c) has 1 to 60% by weight of water added to it in another contact step and
d) is heated during step c) or thereafter to a temperature of 50 to 150°C in another heating step,
at least part of the energy required for heating in the other heating step d) being supplied in the form of electromagnetic radiation in the frequency range from 3 to 300,000 MHz.

7. A process as claimed in any of the preceding claims, **characterized in that** the electromagnetic radiation is applied for 0.5 to 60 minutes and preferably for 1 to 30 minutes.

8. A process as claimed in any of the preceding claims, **characterized in that** the electromagnetic radiation has a frequency in the range from 300 to 30,000 MHz.

## Revendications

1. Procédé de préparation de dérivés de polysaccharides ayant une solubilité retardée dans l'eau, comprenant les étapes
a) mise en contact d'un dérivé de polysaccharide avec une solution aqueuse de glyoxal et/ou avec du polyglyoxal dans une étape de contact et
b) chauffage du dérivé de polysaccharide, durant l'étape a) et/ou à la suite de celle-ci, à une température de' 50 à 150 °C dans une étape de chauffage,
**caractérisé en ce qu'**au moins une partie de l'énergie nécessaire au cours de l'étape de chauffage b) est acheminée sous la forme d'un rayonnement électromagnétique présentant une gamme de fréquence s'étendant d'environ 3 à environ 300 000 MHz.

2. Procédé selon la revendication 1, **caractérisé en ce que** le dérivé de polysaccharide utilisé présente une teneur en eau de 15 % en poids au maximum.

3. Procédé selon la revendication 1 ou 2, **caractérisé en ce que** le dérivé de polysaccharide utilisé est présent sous la forme d'une poudre, dont 60 % des particules présentent une grosseur (déterminée selon DIN 4188) inférieure à 0,5 mm.

4. Procédé selon une des revendications qui précèdent, **caractérisé en ce que** l'on utilise du polyglyoxal dans l'étape a).

5. Procédé selon une des revendications qui précèdent, **caractérisé en ce que** le rayonnement électromagnétique est acheminé pendant une période de 0,5 à 60 minutes.

6. Procédé selon une des revendications qui précèdent, **caractérisé en ce que** le produit issu de l'étape de chauffage b)
c) est mélangé avec 1 à 60 % en poids d'eau dans une autre étape de contact et
d) est chauffé durant l'étape c) ou à la suite de celle-ci, dans une autre étape de chauffage à une température de 50 à 150 °C,
au moins une partie de l'énergie nécessaire au chauffage dans l'autre étape de chauffage d) est acheminée sous la forme d'un rayonnement électromagnétique présentant une gamme de fréquence denviron 3 à environ 300 000 MHz.

7. Procédé selon une des revendications qui précèdent, **caractérisé en ce que** le rayonnement électromagnétique est acheminé dans chaque cas pendant une période de 0,5 à 60 minutes, de préférence de 1 à 30 minutes.

8. Procédé selon une des revendications qui précèdent, **caractérisé en ce que** le rayonnement électromagnétique présente une gamme de fréquence de 300 à 30.000 MHz dans chaque cas.
